# EUROPÄISCHE PATENTSCHRIFT

(11) **EP 1 839 790 B1**
(45) Veröffentlichungstag und Bekanntmachung des Hinweises auf die Patenterteilung: **07.01.2009**
(21) Anmeldenummer: 07006293.0
(22) Anmeldetag: 27.03.2007
(51) Int. Cl.: B23D 31/00, F16C 9/04

(54) **Vorrichtung und Verfahren zum Bruchtrennen von Pleueln**
Method and device for fracture-splitting of connecting rods
Dispositif et procédé destinés à la division par rupture de bielles

(30) Priorität: 29.03.2006 DE 102006014575; 18.07.2006 DE 102006033191
(43) Veröffentlichungstag der Anmeldung: 03.10.2007
(73) Patentinhaber: Fraunhofer-Gesellschaft zur Förderung der angewandten Forschung e.V., 80686 München (DE)
(72) Erfinder: Zeller, Rolf, 79312 Emmendingen (DE); Veneziano Broccia, Carmelo, 79348 Freiamt (DE)
(74) Vertreter: Rösler, Uwe

(56) Entgegenhaltungen:
- EP-A- 1 588 791
- EP-A1- 0 985 479
- US-B1- 6 644 529

## Beschreibung

### Technisches Gebiet

Die Erfindung bezieht sich auf eine Vorrichtung sowie ein Verfahren zum Bruchtrennen eines Pleuels im Bereich eines Pleuelauges, das von einer, einen kreisförmigen Innenquerschnitt umfassenden Zylindermantelfläche begrenzt ist, mit zwei Druckstücken, die beweglich gelagert und getrennt voneinander durch ein Separierungsmittel in zwei diametral entgegen gesetzte Raumrichtungen treibbar und derart dimensioniert sind, dass beide Druckstücke samt zwischen liegendem Separierungsmittel derart in das Pleuelauge einführbar sind, dass die Druckstücke bei diametraler Auslenkung vermittels des Separierungsmittels an jeweils diametral gegenüberliegenden Mantelflächenbereichen mit dem Pleuel in Wirkverbindung treten.

### Stand der Technik

Pleuelstangen für Hubkolbenmotoren, wie sie bei Motorrädern, Personkraftwägen und Lastkraftfahrzeugen zum Einsatz kommen, werden heute serienmäßig nach dem Verfahren des sogenannten Bruchtrennens hergestellt. Die einstückig, zumeist in Form eines Guss- oder Schmiedeteils vorliegende Pleuelstange gilt es zu Montagezwecken längs der Kurbelwelle im Bereich des großen Pleuelauges aufzutrennen zum Erhalt zweier lösbar fest miteinander fügbarer Teile, das so genannte Deckel- und Stangenteil. Die hierfür eingesetzte Technik des Bruchtrennens ist bereits aus der Patentliteratur seit den 80ziger Jahre bekannt ist, siehe bspw. US 4,569,109, USA 4,754,906 sowie EP 0 396 797 A1. Bei allen bekannten Vorgehensweisen zum Bruchtrennen des großen Pleuelauges werden, angepaßt an die Innenkontur des im Querschnitt kreisförmig vorgefertigten Pleuelauges, jeweils zwei halbzylinderförmig ausgebildete Druckstücke eingesetzt, über die auf die Innenfläche des großen Pleuelauges eine Aufweitkraft erzeugt wird, die solange erhöht wird, bis die Bruchgrenze des Pleuelmaterials erreicht ist und der Pleueldeckel von der Pleuelstange durch Bruch getrennt werden. Hierzu werden die zwei halbzylinderförmig ausgebildeten Druckstücke zumeist über einen Keil auseinandergetrieben, wobei zuvor die Innenwand des Pleuelauges mit jeweils zwei diametral gegenüberliegenden Kerben versehen wird, deren Kerbwirkung den Bruchverlauf im Wesentlichen vorgibt. Nach dem Trennvorgang sind der Pleueldeckel sowie die Pleuelstange durch zwei Brüche voneinander getrennt, wobei die längs der Brüche gegenüberliegenden vier Trennflächen unverwechselbar jeweils zueinander passen.

Diese Vorgehensweise zum gezielten Auftrennen des Pleuelauges ist inzwischen in konventionellen Fertigungslinien entweder mit aufrecht stehenden Fallgewichtsanlagen oder mit schlagartiger Brucheinleitung bei horizontal gelagerten Pleueln, wie dies beispielsweise in der vorstehend zitierten EP 0 396 797 A1 der Fall ist, realisiert. Weiterführende Angaben zum Bruchtrennen, das auch als "Cracken" in die Literatur Eingang gefunden hat, können dem Artikel von J. G. Blauel, R. A. Mayville, M. Möser, "Werkstoff und Mechanik beim Bruchtrennen von Automobil-Pleuel", Materialwissenschaft und Werkstofftechnik, Band 31 (2000), Seite 238 bis 244, Wiley-VCH Verlag, Weinheim, entnommen werden.

Unerwünschter Weise treten bei den im Betrieb befindlichen Crack-Anlagen zur Bruchtrennung von Pleuelstangen nicht tolerierbare Ausschußraten aufgrund mangelhafter Bruchergebnisse auf, die sich durch Materialausbrüche im Bereich der Bruchebene, zumeist an den peripheren Außenseiten des Pleuelauges, ergeben. Hierbei treffen beide Bruchfronten, die von der Ankerbung auf der inneren Oberfläche des Pleuelauges aus starten, auf der entsprechenden Außenseite des Pleuelauges nicht in einer Ebene zusammen, so dass makroskopische Bruchteile längs der sich an der Außenseite des Pleuelauges ausbildenden Bruchlinie aus der Pleueloberfläche herausbrechen. Ebenso werden Bruchkonstellationen beobachtet, bei denen der Riss bereits an der Innenfläche des Pleuelauges aus der Ankerbung herausläuft. In all diesen Fällen müssen die schadhaften Pleuelstangen als Ausschuß ausgesondert werden.

Der US 6,644,529 B1 kann eine gattungsgemäße Vorrichtung zum Bruchtrennen eines Pleuels entnommen werden, bei der zwei an die Innenkontur des Pleuelauges konform angepasste Druckstücke das Pleuelauge bis zum Materialbruch zu belasten vermögen.

### Darstellung der Erfindung

Der Erfindung liegt die Aufgabe zugrunde, ein Verfahren sowie eine Vorrichtung zum Bruchtrennen eines Pleuels im Bereich eines Pleuelauges, das von einer, einen kreisförmigen Innenquerschnitt umfassenden Zylindermantelfläche begrenzt ist, mit zwei Druckstücken, die beweglich gelagert und getrennt voneinander durch ein Separierungsmittel in zwei diametralen entgegengesetzte Raumrichtungen treibbar und derart dimensioniert sind, dass beide Druckstücke samt zwischenliegendem Separierungsmittel derart in das Pleuelauge einführbar sind, dass die Druckstücke bei diametraler Auslenkung vermittels des Separierungsmittels an jeweils diametral gegenüberliegenden Mantelflächenbereichen mit dem Pleuel in Wirkverbindung treten, derart weiterzubilden, dass die vorstehend beschriebenen Materialausbrüche, die letztlich Ursache für ein nicht akzeptables Maß an Ausschussteilen in einer Produktionslinie sind, vermieden werden sollen. Ziel ist es vielmehr, ein Pleuel im Bereich des Pleuelauges unter Ausbildung zweier sauber verlaufender, aber dennoch unverwechselbar zueinander passender Bruchtrennflächen im Wege des Bruchtrennens in einen Deckel- sowie einem Stangenteil aufzuteilen.

Die Lösung der der Erfindung zugrunde liegenden Aufgabe ist in den Ansprüchen 1 und 8 angegeben. Gegenstand des Anspruches 16 ist ein Verfahren zum Bruchtrennen eines Pleuels im Bereich des Pleuelauges. Den Erfindungsgedanken vorteilhaft weiterbildende Merkmale sind Gegenstand der Unteransprüche sowie im Weiteren der Beschreibung unter Bezugnahme auf die Ausführungsbeispiele zu entnehmen.

Genauere Untersuchungen der während eines Bruchtrennvorganges auftretenden Bruchkräfte haben ergeben, dass bei bisheriger Praxis des Bruchtrennens der Kontaktbereich zwischen den innerhalb des Pleuelauges zu positionierenden, halbzylinderförmig ausgebildeten Druckstücken mit der Innenfläche des Pleuelauges, der sich insbesondere während des kraftbeaufschlagten Auseinandertreibens der jeweils zwei Druckstücke ergibt, nicht eindeutig festgelegt ist. So ist bislang weder in der Literatur, noch in den einschlägigen Fachkreisen das Spiel zwischen den halbzylinderförmig ausgebildeten Druckstücken und der Innenkontur des großen Pleuelauges während des Bruchtrennverfahrens diskutiert, ferner wurde bislang auch nicht die auftretende Herstellungsvarianz bezüglich der Innenkontur des Pleuelauges diskutiert bzw. berücksichtigt. Anmelderseitige Untersuchungen ergaben jedoch, dass beim Auseinanderdrücken der beiden halbzylinderförmig ausgebildeten Druckstücke je nach Toleranzlage im Bereich der Ankerbung an der Innenfläche des großen Pleuelauges eine kombinierte Beanspruchung aus einer 3-Punkt-Biegung sowie Zugbelastung auftritt. Der Anteil der 3-Punkt-Biegung ist verhältnismäßig klein und variiert in Abhängigkeit von der Toleranzlage des Durchmessers des großen Pleuelauges.

Aufgrund des während des Bruchtrennens auftretenden, sich über die nahezu gesamte Innenkontur erstreckenden Kontaktbereiches zwischen dem Pleuelauge und den beiden halbzylinderförmig ausgebildeten Druckstücken wird das Pleuelauge in jenem Querschnitt, der bruchgetrennt werden soll, durch eine weitgehend homogene Zugspannung beansprucht, wobei eine lokale Spannungsüberhöhung aufgrund der Kerbwirkung an der Stelle der Ankerbung im Bereich der Innenfläche des Pleuelauges auftritt. Genauere Beobachtungen zeigen, dass die zu vermeidenden Materialausbrüche und somit die Fehler ausschließlich auf der Seite des Primärbruchs auftreten, d.h. in jenem Bereich des Pleuelauges, in dem sich zeitlich als erstes der Bruch ausbildet. Keine derartigen Schädigungen konnten bislang auf der Seite des Sekundärbruches beobachtet werden. Ferner ist festzustellen, dass auf der Seite des Primärbruches die Wandung des Pleuelauges fast ausschließlich mit einer über dem Querschnitt homogenen Zugspannung beansprucht wird, wohingegen die Sekundärbruchseite überwiegend einer Biegebeanspruchung unterliegt. Auf welcher Seite der Primärbruch, und in folge dessen auf welcher Seite der Sekundärbruch, der dem Primärbruch diametral gegenüberliegt, entsteht, läßt sich im Vorhinein nicht festlegen. Dies hängt von einer Vielzahl konstruktions- und prozessbedingter Parameter ab, wie beispielsweise dem realen Querschnitt sowie der jeweiligen Kerbschärfe der in der Innenwand des Pleuelauges eingebrachten Kerben.

Auf der Grundlage der vorstehend durch die Anmelderin erlangten Erkenntnisse zeichnet sich eine lösungsgemäß ausgebildete Vorrichtung mit den Merkmalen des Oberbegriffes des Anspruches 1 dadurch aus, dass die Druckstücke jeweils einen Kontaktbereich aufweisen, über den die Druckstücke mit jeweils einem lokal begrenzten Mantelflächenbereich des Pleuels derart in Wirkverbindung bringbar sind, dass sich längs der Zylindermantelfläche, die sich jeweils zwischen beiden Mantelflächenbereichen erstreckt, ein 3-Punkt-Biegespannungsverlauf einstellt.

Gelingt es nämlich, beide Seiten des Pleuelauges, insbesondere in jene Bereiche, in denen sich inwandig zum Pleuelauge die diametral gegenüberliegenden Kerben befinden, von vornherein durch eine 3-Punkt-Biegung zu beanspruchen, so kann aufgrund der bisher gewonnenen Erkenntnisse davon ausgegangen werden, dass die durch Materialausbrüche verursachte Ausschußrate deutlich reduziert werden kann.

Lösungsgemäß zeigt sich, dass bei Ausbildung einer 3-Punkt-Biegung längs des durch Bruchtrennung aufzutrennenden Pleuelauges am Ort jeweils der Ankerbung an der innenliegenden Zylindermantelfläche des Pleuels die Zugspannung von vornherein am höchsten ist, so dass die Kerbwirkung optimal ausgenutzt werden kann und die Gefahr, dass sich der ausbildende Riss aus der Sollbruchebene herausläuft, sehr stark eingeschränkt wird. Hinzu kommt, dass bei einer 3-Punkt-Biegung auch eine automatische Zentrierung der Bruchstelle erfolgt, und das in das Pleuelauge induzierte Biegemoment und damit verbunden die Biegespannung nur im höchstbeanspruchten Pleuelaugenquerschnittsbereich maximal ist, links und jeweils rechts davon jedoch gleichmäßig deutlich abfällt. Durch diese Kräftekonzentration in dem Bruchbereich wird einerseits das zu die jeweiligen Bruchbereiche angrenzende Pleuelmaterial weniger stark belastet und darüber hinaus sind weitaus geringere Kräfte zum Bruchtrennen erforderlich als bei den bisher bekannten Bruchtrenntechniken.

Zur Realisierung einer 3-Punkt-Biegespannung innerhalb des das Pleuelauge umgebenden Pleuelmaterials werden vorzugsweise halbzylinderförmig ausgebildete Druckstücke eingesetzt, deren jeweils konvex ausgebildete Oberfläche über nur einen eng begrenzten Kontaktbereich mit der Zylindermantelfläche des Pleuelauges in Berührung tritt. So haben sich halbzylinderförmig ausgebildete Druckstücke als für besonders geeignet herausgestellt, deren die kreisförmig gekrümmte Oberfläche beschreibende Radien deutlich kleiner jenem Radius ist, der das kreisförmig ausgebildete Pleuelauge beschreibt. Gute Bruchergebnisse konnten experimentell nachgewiesen werden unter Verwendung von Druckstücken, deren die kreisförmig gekrümmte Oberfläche beschreibende Radien maximal dreiviertel, vorzugsweise die Hälfte des Pleuelaugeradius R entsprechen. Wie im weiteren unter Bezugnahme auf die in den Figuren dargestellten Ausführungsbeispiele gezeigt wird, können die Druckstücke zur Induzierung der lösungsgemäß vorgeschlagenen 3-Punkt-Biegung längs des Pleuelaugematerials sowohl innwandig an die Zylindermantelfläche des Pleuelauges angelegt werden oder aber auch von außen auf das Pleuelauge kraftbeaufschlagt einwirken. Im ersten Fall werden die Druckstücke in an sich bekannter Weise in entgegengesetzte Raumrichtungen von innen gegen die Zylindermantelfläche des Pleuelauges gedrückt, wobei die Kontaktbereiche zwischen den Druckstücken und der Zylindermantelfläche des Pleuelauges jeweils diametral gegenüber liegen und darüber hinaus 90° gegenüber den sich ebenfalls gegenüberliegenden Einkerbungen längs der Zylindermantelfläche versetzt angeordnet sind.
Im Falle der von außen auf das Pleuelauge aufgesetzten Druckstücke werden diese in oder nahe der Ebene der Ankerbungen angesetzt und mit räumlich jeweils zugewandten Kraftrichtungen auf das Pleuelauge aufgedrückt. Weitere Einzelheiten hierzu können der weiteren Beschreibung unter Bezugnahme auf die Ausführungsbeispiele entnommen werden.

Der lösungsgemäßen Vorrichtung liegt ein lösungsgemäßes Verfahren zum Bruchtrennen eines Pleuels im Bereich eines Pleuelauges gemäß den Merkmalen des Oberbegriffes des Anspruches 17 zugrunde, wobei das lösungsgemäße Verfahren sich dadurch auszeichnet, dass ein durch die Druckstücke auf das Pleuel einwirkender Krafteintrag jeweils derart erfolgt, dass sich längs zweier Zylindermantelflächen, die sich jeweils zwischen beiden Bereichen des Krafteintrages erstrecken, ein 3-Punkt-Biegespannungsverlauf einstellt.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Darstellung eines Bruchszenarios mit innenliegenden Druckstücken,
- Fig. 2: schematisierte Darstellung eines Bruchszenarios mit am Pleuelauge außen anliegenden Druckstücken sowie
- Fig. 3 a, b: Schematisierte Darstellung zum 3-Punkt-Biegespannungsverlauf.

### Wege zur Ausführung der Erfindung, gewerbliche Anwendbarkeit

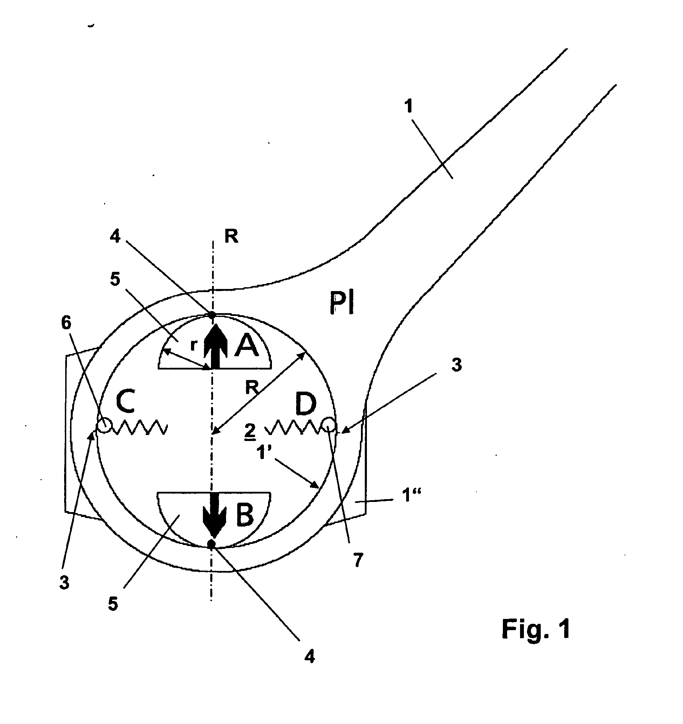

In Figur 1 ist eine schematisierte Draufsicht auf ein Pleuel 1 dargestellt mit einem kreisrund ausgebildeten Pleuelauge 2, das von einer innenliegenden Zylindermantelfläche 1 umgeben ist. Die ebenfalls dargestellten äußeren Pleuelansätze 1" dienen der Einbringung jeweils eines Innengewindes und einer darin einbringbaren Schraubverbindung zum lösbar festen Verbinden der zwei im Wege des Bruchtrennens getrennten Teile, nämlich dem Deckel- und dem Pleuelstangenteil.

Längs der innenliegenden Zylindermantelfläche 1' sind jeweils diametral gegenüberliegend, vorzugsweise mit Hilfe eines Lasers, Ankerbungen 3 eingebracht, die zur definierten lokalen Rissausbildung dienen. An jeweils gegenüberliegenden Kontaktbereichen 4 längs der Zylindermantelfläche 1' sind jeweils halbzylinderförmig ausgebildete Druckstücke 5 vorgesehen, die zur Druckkrafteinleitung in das Pleuel 1 im Bereich des Pleuelauges 2 in jeweils entgegengesetzte Richtungen A, B kraftbeaufschlagt auslenkbar gelagert sind. Um einen lösungsgemäß ausgebildeten 3-Punkt-Biegespannungsverlauf innerhalb des das Pleuelauge ringförmig umgebenden Pleuelmaterials zu induzieren, und dies sowohl längs der linken als auch rechten Ringhälften, die durch die in Figur 1 eingetragene Raumachse R voneinander getrennt sind, treten die halbzylinderförmig ausgebildeten Druckstücke 5 jeweils über nur lokal eng begrenzte Kontaktbereiche 4 in Wirkverbindung mit der jeweiligen Zylindermantelfläche 1'. Die halbzylinderförmig ausgebildeten Druckstücke 5 weisen hierbei einen Radius r auf, der verglichen zum Radius R, durch den das Pleuelauge 2 definiert ist, sehr viel kleiner bemessen ist, vorzugsweise kleiner als dreiviertel des Radius R ist. Im Ausführungsbeispiel gemäß Figur 1 beträgt der Radius r etwa die Hälfte des Radius R.

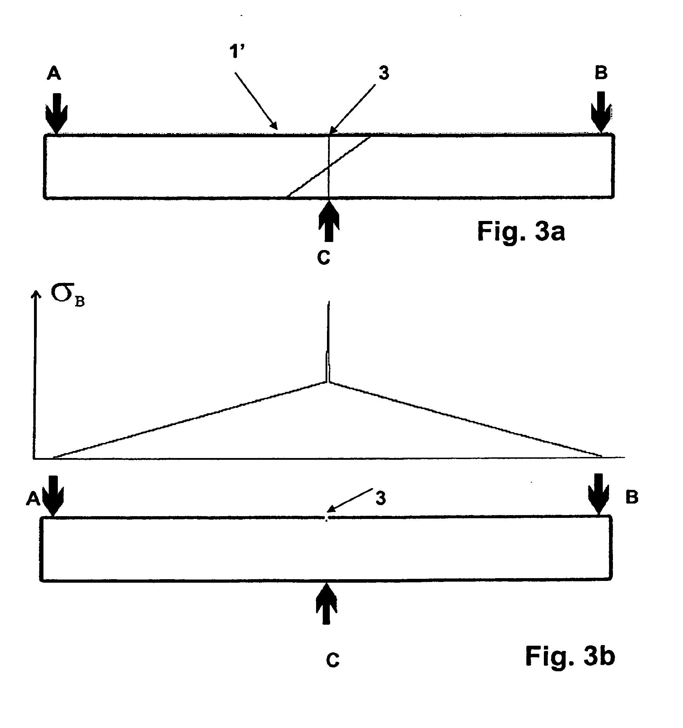

In der in Figur 1 gezeigten Konstellation ist ein 3-Punkt-Biegespannungsverlauf längs einer Ringhälfte des Pleuelauges 2 erzielbar, der in Figur 3a schematisiert dargestellt ist. Figur 3a zeigt stark schematisiert eine Ringhälfte in Draufsicht, die das Pleuelauge 2 hälftig umgibt, jedoch aus Gründen vereinfachter Darstellung in gerader Streckung dargestellt ist. An der dem Pleuelauge 2 zugewandten Zylindermantelfläche 1 greifen die durch die nicht weiter dargestellten Druckstücke ausgeübten Druckkräfte A, B an. Durch die Kraftsymmetrie bezüglich der Krafteinleitungen A, B und der halbringförmigen Ausbildung des Pleuelmaterials tritt auch an der der Kerbe 3 gegenüberliegenden Seite eine virtuell wirkende Biegekraft auf, so dass eine sogenannte 3-Punkt-Biegung gemäß Bilddarstellung erzielt wird. In Figur 3b ist zusätzlich der Zugspannungsverlauf σ_{B} dargestellt, dem zu entnehmen ist, dass genau im Bereich der Kerbe 3 ein ausgeprägtes Maximum auftritt, wodurch aufgrund der Kerbwirkung die Rissbildung initiiert wird.

Um zu gewährleisten, dass die Druckstücke 5 in der in Figur 1 dargestellten Anordnung, nämlich 90° zu den Kerben versetzt, an der Zylindermantelfläche 1 des Pleuels 1 angreifen, dienen zusätzlich sogenannte Zentrierstifte 6, 7, die einerseits die Druckstücke 5 zu zentrieren vermögen und andererseits Gleitvorgänge der Druckstücke 5 längs der Zylindermantelfläche 1' während der Krafteinleitung zu vermeiden helfen.

Die Federkraft-beaufschlagten Zentrierstifte 6, 7 treten in Deckung mit den Ankerbungen 3 oder sind leicht seitlich zu diesen versetzt ausgerichtet.

Die in Figur 1 dargestellten Komponenten hinsichtlich der Druckstücke 5 sowie der Federkraft-beaufschlagten Zentrierstifte 6, 7 sind vorzugsweise auf einer nicht weiter dargestellten gemeinsamen Basisplatte angeordnet, auf der letztlich das Pleuel aufliegt.

Nicht notwendigerweise ist es erforderlich, das beide Druckstücke 5 zugleich in die in Figur 1 angegebenen entgegengesetzten Raumrichtungen A, B auslenkbar sind. Denkbar wäre auch, dass eines der beiden Druckstücke räumlich fest relativ zur Basisplatte angebracht ist und das jeweils andere Druckstück längs beweglich geführt ist.

Innerhalb der Basisplatte ist vorzugsweise zentrisch zum Pleuelauge 2 eine ebenfalls nicht weiter dargestellte Öffnung vorgesehen, die es ermöglicht, die Druckstücke 5 durch die zentrische Einführung eines Separiermittels, beispielsweise eines keilförmig ausgebildeten Separiermittels, in die angegebenen Raumrichtungen A, B auseinanderzutreiben. Während des Auseinanderdrückens der Druckstücke 5 wird das Pleuelauge, respektive das das Pleuelauge 2 umgebende ringförmig ausgebildete Pleuelmaterial im elastischen Bereich des Werkstoffes oval verformt, woraus sich für die Ankerbungen 3 eine 3-Punkt-Biegung ergibt. Sowohl die Kerbschärfe als auch der Kerbfaktor sind so zu wählen, dass im Kerbgrund die Bruchspannung des Werkstoffes sicher überschritten wird, ohne dass links und rechts der jeweiligen Ankerbung 3 die sogenannte Streckgrenze erreicht wird. Nur in diesem Fall ist sichergestellt, dass das Pleuelauge 2 keine bleibende ovale Verformung erfährt. Je nach verwendetem Werkstoff kann dieses Erfordernis bereits ab einem Kerbfaktor von ca. 2 gewährleistet werden, wobei der Kerbfaktor (auch Formzahl genannt) die Beziehung zwischen Kerbradius Kerbform und Kerbtiefe zur Nennspannung (ohne Kerbwirkung) des Bauteils darstellt. Im Genaueren gibt der Kerbfaktor an, um welchen Faktor die Spannung im Kerbgrund gegenüber der Nennspannung erhöht ist. Die Nennspannung ist diejenige Spannung, die sich bei gleicher Belastung an einem glatten Bauteil mit dem Querschnitt des Kerbgrundes ergeben würde. Der Kerbfaktor ist abhängig von der Kerbform, dem Kerbradius und der Kerbtiefe (siehe Neuber: Kerbspannungslehre - Theorie der Spannungskonzentration - Genaue Berechnung der Festigkeit; 3. Auflage 1985, Springer Verlag, ISBN 3-540-13558-8).

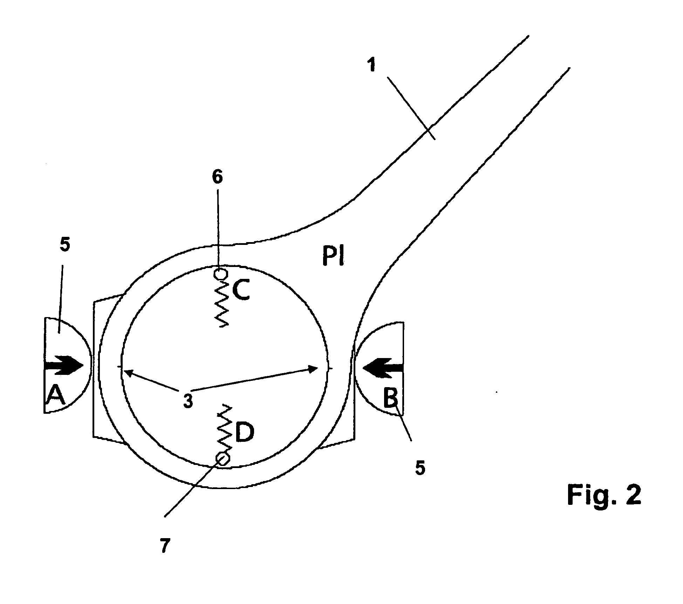

In einer in Figur 2 dargestellten alternativen Ausführungsform der lösungsgemäßen Vorrichtung zum Bruchtrennen eines Pleuels 1 im Bereich des Pleuelauges 2 werden die halbzylinderförmig ausgebildeten Druckstücke 5 an den peripheren Außenumfang des das Pleuelauge 2 umgebenden Pleuelmaterials in der in Figur 2 dargestellten diametral gegenüberliegenden Anordnung kraftbeaufschlagt angepresst. Hierbei wirken die aufeinander zugewandten Druckkräfte A, B in der Ebene der sich ebenfalls gegenüberliegenden Ankerbungen 3, wodurch sich in gleicher Weise ein 3-Punkt-Biegespannungsverlauf ergibt, der in den Figuren 3a und b dargestellt ist. Die in diesem Fall vorhandenen Zentrierstifte 6, 7 können auf der Innen- oder der Außenseite des Pleuelauges 2 angeordnet sein.

Ebenfalls kann es sich als vorteilhaft erweisen, die Krafteinleitungspunkte der Druckstücke 5 nicht wie in Figur 2 dargestellt, exakt längs der durch die Ankerbungen 3 vorgegebenen Ebene anzuordnen, sondern leicht versetzt hierzu, um möglicherweise vorhandene Pleuelasymmetrien zu kompensieren.

Auch ist es möglich, die in den Figuren 1 und 2 dargestellten alternativen Konfigurationen kombiniert auszuführen, so dass für eine Brucheinleitung in das Pleuel im Bereich des Pleuelauges sowohl äußere als auch innere Druckstücke kraftbeaufschlagt auf das Pleuelmaterial einwirken. Hierzu ist es vorteilhaft, die vier Druckstücke über ein geeignetes Getriebe, beispielsweise über ein Pantographengetriebe, synchron anzutreiben, um den jeweiligen Krafteintrag auf das Pleuel zu synchronisieren. Dies hätte den zusätzlichen Vorteil, dass die Vorrichtung selbst zentrierend ist, so dass auf zusätzliche Zentrierhilfen in Form der Federkraft-beaufschlagten Zentrierstifte 6, 7 verzichtet werden kann.

### Bezugszeichenliste

- 1: Pleuel
- 1': Zylindermantelfläche
- 1": Pleuelansätze
- 2: Pleuelauge
- 3: Ankerbung
- 4: Kontaktbereich
- 5: Druckstücke
- 6, 7: Zentrierstift

## Patentansprüche

1. Vorrichtung zum Bruchtrennen eines Pleuels (1) im Bereich eines Pleuelauges (2), das von einer, einen kreisförmigen Innenquerschnitt umfassenden Zylindermantelfläche begrenzt ist, der mittels eines Radius (R) beschreibbar ist, mit zwei Druckstücken (5), die beweglich gelagert und getrennt voneinander durch ein Separierungsmittel in zwei diametral entgegengesetzte Raumrichtungen treibbar und derart dimensioniert sind, dass beide Druckstücke (5) samt zwischenliegendem Separierungsmittel derart in das Pleuelauge (2) einführbar sind, dass die Druckstücke (5) bei diametraler Auslenkung vermittels des Separierungsmittels an jeweils diametral gegenüberliegenden Mantelflächenbereichen mit dem Pleuel (1) in Wirkverbindung treten, wobei die Druckstücke (5) mit einer kreisförmig gekrümmten Oberfläche die mittels eines Radius (r) beschreibbar ist, sowie mit einer eben ausgebildeten Oberfläche ausgebildet sind, **dadurch gekennzeichnet, dass** die Druckstücke (5) halbzylinderförmig ausgebildet sind,
dass der Radius (r) nach folgendem Verhältnis bemessen ist: r / R ≤¾, dass die Druckstücke (5) über einen Teilbereich ihrer jeweils kreisförmig gekrümmten Oberfläche jeweils mit einem lokal begrenzten Mantelflächenbereich in Wirkverbindung treten ,
und
dass sich längs der Zylindermantelfläche (1'), die sich jeweils zwischen den beiden Mantelflächenbereichen erstreckt, ein 3-Punkt-Biegespannungsverlauf einstellt.

2. Vorrichtung nach Anspruch 1,
**dadurch gekennzeichnet, dass** der Radius (r) nach folgendem Verhältnis bemessen ist: r = R/2.

3. Vorrichtung nach einem der Ansprüche 1 bis 2,
**dadurch gekennzeichnet, dass** ein zu den Druckstücken (5) separates Zentriermittel vorgesehen ist, das die Druckstücke (5) innerhalb des Pleuelauges (2) zentriert, bevor die Druckstücke (5) vermittels des Separierungsmittels auseinandergetrieben werden.

4. Vorrichtung nach Anspruch 3,
**dadurch gekennzeichnet, dass** das Zentriermittel wenigstens zwei in entgegengesetzte Richtungen auslenkbare Zentrierstifte (6, 7) vorsieht, deren Auslenkrichtungen jeweils senkrecht zu den Raumrichtungen stehen, längs der die Druckstücke (5) auslenkbar sind.

5. Vorrichtung nach Anspruch 3 oder 4,
**dadurch gekennzeichnet, dass** die Druckstücke (5) sowie das Zentriermittel auf einer Basisplatte jeweils beweglich angeordnet sind.

6. Vorrichtung nach Anspruch 3 oder 4,
**dadurch gekennzeichnet, dass** die Druckstücke (5) sowie das Zentriermittel auf einer Basisplatte angeordnet sind,
dass ein Druckstück fest und das andere beweglich angeordnet ist.

7. Vorrichtung nach einem der Ansprüche 4 bis 6,
**dadurch gekennzeichnet, dass** das Pleuelauge (2) an der Zylindermantelfläche (1') an zwei diametral gegenüberliegenden Stellen jeweils eine Kerbe (3) aufweist,
dass das Zentriermittel derart ausgebildet ist, dass die Zentrierstifte (6, 7) inwandig zum Pleuelauge (2) jeweils unmittelbar an einer Kerbe (3) anliegen.

8. Vorrichtung zum Bruchtrennen eines Pleuels (1) im Bereich eines Pleuelauges (2), das von einer, einen kreisförmigen Innenquerschnitt umfassenden Zylindermantelfläche (1') begrenzt ist, mit zwei Druckstücken (5), die beweglich gelagert und getrennt voneinander in zwei diametral entgegengesetzte Raumrichtungen treibbar sind,
**dadurch gekennzeichnet, dass** die Druckstücke (5) jeweils einen Kontaktbereich aufweisen, über den die Druckstücke (5) mit jeweils einem lokal begrenzten Bereich an einem der Zylindermantelfläche (1') peripher gegenüberliegenden Außenbereich des das Pleuelauge (2) umgebenden Pleuels (1) derart in Wirkverbindung bringbar sind, dass sich längs der Zylindermantelfläche (1'), die sich jeweils zwischen beiden Berührstellen im Pleuelauge (2) der Druckstücke (5) mit dem Pleuel (1) innenliegend erstreckt, ein 3-Punkt-Biegespannungsverlauf einstellt.

9. Vorrichtung nach Anspruch 8,
**dadurch gekennzeichnet, dass** die Druckstücke (5) halbzylinderförmig ausgebildet sind, mit einer kreisförmig gekrümmten Oberfläche sowie mit einer eben ausgebildeten Oberfläche,
dass die kreisförmig gekrümmte Oberfläche mittels eines Radius (r) beschreibbar ist, der kleiner ist als jener Radius (R), der den kreisförmigen Innenquerschnitt des Pleuelauges (2) beschreibt, und
dass die Druckstücke (5) über einen Teilbereich ihrer jeweils kreisförmig gekrümmten Oberfläche jeweils mit dem lokal begrenzten Bereich am Außenbereich des das Pleuelauge (2) umgebenden Pleuels (1) in Wirkverbindung treten.

10. Vorrichtung nach Anspruch 9,
**dadurch gekennzeichnet, dass** der Radius (r) nach folgendem Verhältnis bemessen ist: r / R ≤¾, vorzugsweise r = R/2.

11. Vorrichtung nach einem der Ansprüche 8 bis 10,
**dadurch gekennzeichnet, dass** die Druckstücke (5) längs einer Linearachse derart beweglich angeordnet sind, dass das Pleuel (1) am Außenbereich an jeweils diametral gegenüberliegenden Bereichen druckbeaufschlagt zusammenpressbar ist.

12. Vorrichtung nach einem der Ansprüche 8 bis 11,
**dadurch gekennzeichnet, dass** das Pleuel (1) an der Zylindermantelfläche (1') an zwei diametral gegenüberliegenden Stellen mit jeweils einer Kerbe (3) versehen ist, und dass ein Zentriermittel vorgesehen ist, das die Druckstücke (5) außerhalb des Pleuels (1) jeweils zu den innen liegenden Kerben (3) unmittelbar gegenüberliegend oder seitlich leicht versetzt zu den Kerben (3) ausrichtet.

13. Vorrichtung nach Anspruch 11 und 12,
**dadurch gekennzeichnet, dass** das Zentriermittel wenigstens zwei in entgegengesetzte Richtungen auslenkbare Zentrierstifte (6, 7) vorsieht, deren Auslenkrichtungen jeweils senkrecht zur Linearachse stehen, längs der die Druckstücke (5) auslenkbar sind, und
dass die Zentrierstifte (6, 7) innenliegend an die Zylindermantelfläche (1') anlegbar sind.

14. Vorrichtung nach Anspruch 12 oder 13,
**dadurch gekennzeichnet, dass** die Druckstücke (5) sowie das Zentriermittel auf einer Basisplatte jeweils beweglich angeordnet sind.

15. Vorrichtung nach Anspruch 12 oder 13,
**dadurch gekennzeichnet, dass** die Druckstücke (5) sowie das Zentriermittel auf einer Basisplatte angeordnet sind,
dass ein Druckstück fest und das andere beweglich angeordnet ist.

16. Verfahren zum Bruchtrennen eines Pleuels (1) im Bereich eines Pleuelauges (2) , das von einer, einen kreisförmigen Innenquerschnitt umfassenden Zylindermantelfläche (1') begrenzt ist, bei dem zwei Druckstücke (5) längs zweier diametral entgegengesetzter Raumrichtungen auf das Pleuel (1) im Bereich des Pleuelauges (2) getrieben werden, wodurch bei Krafteinwirkung durch die Druckstücke (5) auf das Pleuel (1) das Pleuel (1) an zwei gekerbten Stellen (3) längs der Zylindermantelfläche (1') aufbricht,
**dadurch gekennzeichnet,**
**dass** zwischen den Druckstücken (5) und dem Pleuel (1) für einen Krafteintrag jeweils ein Kontaktbereich vorgesehen wird, der punkt-oder linienförmig oder lokal eng begrenzt ist, so dass sich längs zweier Zylindermantelteilflächen, die sich jeweils zwischen beiden Bereichen des Krafteintrages erstrecken, ein 3-Punkt-Biegespannungsverlauf einstellt.

17. Verfahren nach Anspruch 16 ,
**dadurch gekennzeichnet, dass** die Druckstücke (5) von außen auf das Pleuel (1), jeweils mit aufeinander zugewandtem Krafteintrag, zu bewegt werden, oder
dass die Druckstücke (5) von Innen auf die Zylindermantelfläche (1') des Pleuels (1), jeweils mit entgegengesetztem Krafteintrag auseinander getrieben werden.

18. Verfahren nach einem der Ansprüche 16 bis 17,
**dadurch gekennzeichnet, dass** der Krafteintrag auf das Pleuel (1) derart durchgeführt wird, dass jene an der Zylindermantelfläche (1') diametral gegenüberliegenden gekerbten Stellen ein maximales Biegemoment erfahren.

## Claims

1. A device for fracture-splitting a connecting rod (1) in the area of a connecting rod end (2), which is delimited by a cylindrical lateral surface, comprising a circular internal cross-section, which is describable using a radius (R), having two pressure parts (5), which are mounted so they are movable and are drivable separately from one another by separation means in two diametrically opposite spatial directions and are dimensioned in such a way that both pressure parts (5), including interposed separation means, are insertable into the connecting rod end (2) in such a way that the pressure parts (5) are operationally linked to the connecting rod (1) on diametrically opposing lateral surface areas in each case upon diametrical deflection using the separation means, the pressure parts (5) being having a circularly curved surface, which is describable using a radius (r), and having a flatly implemented surface,
**characterized in that** the pressure parts (5) are implemented as semicylindrical,
the radius (r) is dimensioned according to the following ratio: r/R ≤ 3/4, the pressure parts (5) are each operationally linked to a locally delimited lateral surface area over a partial area of their particular circularly curved surface, and
a 3-point bending stress curve results along the cylindrical lateral surface (1'), which extends in each case between the two lateral surface areas.

2. The device according to Claim 1,
**characterized in that** the radius (r) is dimensioned according to the following ratio: r = R/2.

3. The device according to one of Claims 1 through 2,
**characterized in that** centering means separate from the pressure parts (5) are provided, which center the pressure parts (5) within the connecting rod end (2) before the pressure parts (5) are driven apart using the separation means.

4. The device according to Claim 3,
**characterized in that** the centering means provide at least two centering pins (6, 7) deflectable in opposing directions, whose deflection directions are each perpendicular to the spatial directions along which the pressure parts (5) are deflectable.

5. The device according to Claim 3 or 4,
**characterized in that** the pressure parts (5) and the centering means are each situated so they are movable on a baseplate.

6. The device according to Claim 3 or 4,
**characterized in that** the pressure parts (5) and the centering means are situated on a baseplate, and
one pressure part is situated so it is fixed and the other so it is movable.

7. The device according to one of Claims 4 through 6,
**characterized in that** the connecting rod end (2) has a notch (3) in each case on the cylindrical lateral surface (1') at two diametrically opposing points,
and the centering means are implemented in such a way that the centering pins (6, 7) each press directly against a notch (3) inside the connecting rod end (2).

8. A device for the fracture-splitting of a connecting rod (1) in the area of a connecting rod end (2), which is delimited by a cylindrical lateral surface (1) comprising a circular internal cross-section, having two pressure parts (5), which are mounted so they are movable and are drivable separately from one another in two diametrically opposing spatial directions,
**characterized in that** the pressure parts (5) each have a contact area, via which the pressure parts (5) may be operationally linked to a locally delimited area on an external area, peripherally opposing the cylindrical lateral surface (1'), of the connecting rod (1) enclosing the connecting rod end (2) in such a way that a 3-point bending stress curve results along the cylindrical lateral surface (1'), which extends internally in each case between both contact points in the connecting rod end (2) of the pressure parts (5) with the connecting rod (1).

9. The device according to Claim 8,
**characterized in that** the pressure parts (5) are implemented as semicylindrical, having a circularly curved surface and having a flatly implemented surface,
the circularly curved surface is describable using a radius (r), which is smaller than the radius (R) which describes the circular internal cross-section of the connecting rod end (2), and
the pressure parts (5) are operationally linked via a partial area of their particular circularly curved surface to the locally delimited area on the external area of the connecting rod (1) enclosing the connecting rod end (2).

10. The device according to Claim 9,
**characterized in that** the radius (r) is dimensioned according to the following ratio: r/R ≤ 3/4, preferably r = R/2.

11. The device according to one of Claims 8 through 10,
**characterized in that** the pressure parts (5) are situated so they are movable along a linear axis in such a way that the connecting rod (1) is compressible pressure-impinged on the external area on diametrically opposing areas in each case.

12. The device according to one of Claims 8 through 11,
**characterized in that** the connecting rod (1) is provided with a notch (3) in each case at two diametrically opposing points on the cylindrical lateral surface (1'),
and centering means are provided, which orient the pressure parts (5) outside the connecting rod (1) directly opposite to each of the internal notches (3) or slightly laterally offset to the notches (3).

13. The device according to Claims 11 and 12,
**characterized in that** the centering means provide at least two centering pins (6, 7) deflectable in opposing directions, whose deflection directions are each perpendicular to the linear axis along which the pressure parts (5) are deflectable, and
the centering pins (6, 7) may be applied internally to the cylindrical lateral surface (1').

14. The device according to Claim 12 or 13,
**characterized in that** the pressure parts (5) and the centering means are each situated so they are movable on a baseplate.

15. The device according to Claim 12 or 13,
**characterized in that** the pressure parts (5) and the centering means are situated on a baseplate, and
one pressure part is situated so it is fixed and the other so it is movable.

16. A method for the fracture-splitting of a connecting rod (1) in the area of a connecting rod end (2), which is delimited by a cylindrical lateral surface (1) comprising a circular internal cross-section, in which two pressure parts (5) are driven along two diametrically opposing spatial directions on the connecting rod (1) in the area of the connecting rod end (2), whereby the connecting rod (1) breaks open at two notched points (3) along the cylindrical lateral surface (1) upon force action by the pressure parts (5) on the connecting rod (1),
**characterized in that** a contact area is provided in each case between the pressure parts (5) and the connecting rod (1) for a force introduction, which is delimited punctually or linearly or locally narrowly, so that a 3-point bending stress curve results along two cylindrical lateral partial surfaces, which each extend between both areas of the force introduction.

17. The method according to Claim 16,
**characterized in that** the pressure parts (5) are moved toward the connecting rod (1) from the outside, each having force introduction facing toward one another, or the pressure parts (5) are driven apart from one another from the inside onto the cylindrical lateral surface (1') of the connecting rod (1), each having opposing force introduction.

18. The method according to one of Claims 16 through 17,
**characterized in that** the force introduction on the connecting rod (1) is performed in such a way that the notched points diametrically opposite on the cylindrical lateral surface (1') experience a maximum bending torque.

## Revendications

1. Dispositif de séparation par rupture d'une bielle (1), dans la zone d'une tête de bielle (2) qui est limitée par une surface d'enveloppe cylindrique entourant une section transversale intérieure circulaire, qui peut se décrire par un rayon (R), avec deux pièces de pression (5), qui sont logées de façon mobile et qui sont actionnables séparément l'une de l'autre par un moyen de séparation dans deux directions diamétralement opposées dans l'espace et qui sont dimensionnées de sorte que les deux pièces de pression (5), avec le moyen de séparation intercalé puissent être introduites dans la tête de bielle (2) de sorte que, lors d'une déviation diamétrale à l'aide du moyen de séparation, les pièces de pression (5) entrent en liaison active sur chaque fois des zones de surface d'enveloppe diamétralement opposées avec la bielle (1), les pièces de pression (5) étant conçues avec une surface recourbée en forme de cercle, qui peut se décrire au moyen d'un rayon (r), ainsi qu'avec une surface conçue de façon plane, **caractérisé en ce que** les pièces de pression (5) sont réalisées en forme de demi cylindre, **en ce que** le rayon (r) est dimensionné selon le rapport suivant r / R ≤ ¾, **en ce que**, par l'intermédiaire d'une zone partielle de leur surface chaque fois recourbée en forme de cercle, les pièces de pression (5) entrent chacune en contact actif avec une zone de surface d'enveloppe localement limitée,
et
**en ce qu'**un tracé de contrainte de flexion à 3 points s'établit chaque fois entre les deux zones de surface d'enveloppe, le long de la surface d'enveloppe cylindrique (1').

2. Dispositif selon la revendication 1, **caractérisé en ce que** le rayon (r) est dimensionné selon le rapport suivant : r = R/2.

3. Dispositif selon l'une quelconque des revendications 1 à 2, **caractérisé en ce qu'**il est prévu un moyen de centrage séparé des pièces de pression (5), qui centre les pièces de pression (5) à l'intérieur de la tête de bielle (2), avant que les pièces de pression (5) ne soient forcées à s'écarter à l'aide du moyen de séparation.

4. Dispositif selon la revendication 3, **caractérisé en ce que** le moyen de séparation prévoit au moins deux tiges de centrage (6, 7), susceptibles de dévier dans des directions opposées, dont les directions de déviation se situent chacune à la perpendiculaire des directions dans l'espace, le long desquelles les pièces de pression (5) peuvent être déviées.

5. Dispositif selon la revendication 3 ou 4,
**caractérisé en ce que** les pièces de pression (5), ainsi que le moyen de centrage sont disposés, chacun de façon mobile sur une plaque de base.

6. Dispositif selon la revendication 3 ou 4, **caractérisé en ce que** les pièces de pression (5), ainsi que le moyen de centrage sont disposés sur une plaque de base,
**en ce qu'**une pièce de pression est disposée de façon fixe et l'autre de façon mobile.

7. Dispositif selon l'une quelconque des revendications 4 à 6, **caractérisé en ce que** la tête de bielle (2) comporte sur la surface d'enveloppe cylindrique (1'), sur deux endroits diamétralement opposés chaque fois une encoche (3),
**en ce que** le moyen de centrage est conçu de sorte que les tiges de centrage (6, 7) soient adjacentes à la paroi intérieure de la tête de bielle (2), chaque fois directement sur une encoche (3).

8. Dispositif de séparation par rupture d'une bielle (1), dans la zone d'une tête de bielle (2), qui est limitée par une surface d'enveloppe cylindrique
(1') entourant une section transversale intérieure circulaire, avec deux pièces de pression (5), qui sont logées de façon mobile et qui sont actionnables séparément l'une de l'autre dans deux directions diamétralement opposées dans l'espace,
**caractérisé en ce que** les pièces de pression (5) comportent chacune une zone de contact, par l'intermédiaire de laquelle les pièces de pression (5) sont susceptibles d'être amenées en liaison active avec une zone chaque fois localement limitée sur une zone extérieure périphériquement opposée à la surface d'enveloppe cylindrique (1') de la bielle (1) entourant la tête de bielle (2), de sorte que long de la surface d'enveloppe cylindrique (1'), qui s'étend chaque fois entre deux zones de contact des pièces de pression (5) avec la bielle (1), à l'intérieur de la tête de bielle (2) il s'établisse un tracé de contrainte de flexion à 3 points.

9. Dispositif selon la revendication 8,
**caractérisé en ce que** les pièces de pression (5) sont conçues en forme de demi-cylindre, avec une surface recourbée en forme de cercle, ainsi qu'avec une surface conçue de façon plane,
**en ce que** la surface recourbée en forme de cercle peut se décrire par un rayon (r) qui est inférieur au rayon (R) qui décrit la section transversale intérieure circulaire de la tête de bielle (2), et
**en ce que**, par l'intermédiaire d'une zone partielle de leur surface chaque fois recourbée en forme de cercle, les pièces de pression (5) entrent chacune en liaison active avec la zone localement limitée sur la zone extérieure de la bielle (1) entourant la tête de bielle (2).

10. Dispositif selon la revendication 9,
**caractérisé en ce que** le rayon (r) est dimensionné selon le rapport suivant r/R ≤3/4, de préférence r = R/2.

11. Dispositif selon l'une quelconque des revendications 8 à 10,
**caractérisé en ce ue** les pièces de pression (5) sont disposées de façon mobile le long d'un axe linéaire, de sorte que la bielle (1) puisse être comprimée sur la zone extérieure, sur des zones chaque fois diamétralement opposées, en étant soumise à une pression.

12. Dispositif selon l'une quelconque des revendications 8 à 11,
**caractérisé en ce que** sur la surface d'enveloppe cylindrique (1'), sur deux endroits diamétralement opposés, la bielle (1) est munie de chaque fois une encoche (3) et **en ce qu'**il est prévu un moyen de centrage, qui oriente les pièces de pression (5), à l'extérieur de la bielle (1), pour qu'elles soient directement opposées aux encoches (3) intérieures ou latéralement déportées par rapport aux encoches (3).

13. Dispositif selon la revendication 11 ou 12,
**caractérisé en ce que** le moyen de centrage prévoit au moins deux tiges de centrage (6, 7) susceptibles de dévier dans des directions opposées, dont les directions de déviation se situent chacune à la perpendiculaire de l'axe linéaire, le long duquel les pièces de pression (5) sont susceptibles de dévier et
**en ce que** les tiges de centrage (6, 7) sont susceptibles de se mettre en appui à l'intérieur contre la surface d'enveloppe cylindrique (1').

14. Dispositif selon la revendication 12 ou 13,
**caractérisé en ce que** les pièces de pression (5), ainsi que le moyen de centrage sont disposés en étant chacun mobile sur une plaque de base.

15. Dispositif selon la revendication 12 ou 13,
**caractérisé en ce que** les pièces de pression (5), ainsi que le moyen de centrage sont disposés sur une plaque de base,
**en ce qu'**une pièce de pression est disposée de façon fixe et l'autre de façon mobile.

16. Procédé pour la séparation par rupture d'une bielle (1) dans la zone d'une tête de bielle (2), qui est limitée par une surface d'enveloppe cylindrique (1') entourant une section transversale intérieure circulaire, dans lequel deux pièces de pression (5) sont forcées le long de deux directions diamétralement opposées dans l'espace sur la bielle (1), dans la zone de la tête de bielle (2), pour que par l'effet de la force exercée par les deux pièces de pression (5) sur la bielle (1), la bielle (1) se défonce sur deux endroits (3) munis d'encoches, le long de la surface d'enveloppe cylindrique (1'),
**caractérisé en ce que**
entre les pièces de pression (5) et la bielle (1), il est prévu pour une introduction de force chaque fois une zone de contact, qui est limitée sous forme ponctuelle ou linéaire ou localement étroite, pour que le long de deux surfaces d'enveloppe circulaires, qui s'étendent chacune entre les deux zones de l'introduction de force, il s'établisse un tracé de contrainte de flexion à 3 points.

17. Procédé selon la revendication 16,
**caractérisé en ce qu'**on déplace les pièces de pression (5) par l'extérieur sur la bielle (1), chaque fois avec une introduction de force se faisant mutuellement face, ou **en ce qu'**on force les pièces de pression (5) à s'écarter l'une de l'autre par l'intérieur sur la surface d'enveloppe cylindrique (1') de la bielle (1), par introduction de forces opposées.

18. Procédé selon l'une quelconque des revendications 16 à 17,
**caractérisé en ce que** l'introduction de force sur la bielle (1) est réalisée de sorte que les endroits munis d'une encoche qui sont diamétralement opposés sur la surface d'enveloppe cylindrique (1') subissent un couple de flexion maximum.
